# EUROPEAN PATENT SPECIFICATION

(11) **EP 2 045 855 B1**
(45) Date of publication and mention of the grant of the patent: **27.03.2013**
(21) Application number: 08016917.0
(22) Date of filing: 25.09.2008
(51) Int. Cl.: H01M 4/24, H01M 4/38, H01M 10/34, H01M 10/44

(54) **Alkaline storage battery system**
Batteriesystem aus alkalischen Akkumulatoren
Système d'accumulateurs alcalins

(30) Priority: 28.09.2007 JP 2007253990
(43) Date of publication of application: 08.04.2009
(73) Proprietor: Sanyo Electric Co., Ltd., Moriguchi-shi, Osaka (JP)
(72) Inventor: Ako, Atsutoshi, Moriguchi-shi Osaka, 570-8677 (JP); Ochi, Makoto, Moriguchi-shi Osaka, 570-8677 (JP); Yoshida, Shuhei, Moriguchi-shi Osaka, 570-8677 (JP); Kitaoka, Kazuhiro, Moriguchi-shi Osaka, 570-8677 (JP); Takee, Masao, Moriguchi-shi Osaka, 570-8677 (JP)
(74) Representative: Glawe, Delfs, Moll

(56) References cited:
- EP-A- 0 776 057
- EP-A- 0 905 855
- EP-A- 1 998 392
- WO-A-2004/051296
- WO-A-2007/018292
- JP-A- 2003 297 415
- JP-A- 2007 250 439
- JP-A- 2008 071 687
- JP-A- 2008 084 649
- JP-A- 2008 163 421
- JP-A- 2008 192 320
- US-A1- 2007 158 001

## Description

### TECHNICAL FIELD

The present invention relates to an alkaline storage battery including an electrode group having a hydrogen storage alloy negative electrode using a hydrogen storage alloy as a negative electrode active material, a nickel positive electrode using nickel hydroxide as a main positive electrode active material, and a separator, and further including an alkaline electrolyte, in an outer can, and especially relates to an alkaline storage battery system suitable for vehicle applications such as for a hybrid electric vehicle (HEV) and for a pure electric vehicle (PEV).

### BACKGROUND ART

Recently, secondary batteries have been used for various applications, for example, cell phones, personal computers, power tools, electric bicycles, HEVs, and PEVs. Alkaline storage batteries having hydrogen storage alloy negative electrodes are widely used, especially for applications relating to vehicles, such as hybrid electric vehicles (HEV) and pure electric vehicles (PEV). In this context, there is an increasing need to improve output power and further reduce the cost of alkaline storage batteries used for such vehicle-related applications.

JP-A-2005-32573 discloses that increasing the hydrogen equilibrium pressure of a hydrogen storage alloy containing a rare earth element, magnesium, and nickel as main structure elements improves the output power of an alkaline storage battery having a hydrogen storage alloy negative electrode. JP-A-2005-32573 also discloses that increasing the hydrogen equilibrium pressure of a hydrogen storage alloy increases the hydrogen concentration, whereby discharging performance improves (with reduced overvoltage). Furthermore, it discloses that increasing the hydrogen equilibrium pressure of the hydrogen storage alloy increases an open circuit voltage of the battery to improve the discharging performance.

Meanwhile, it is known that hydrogen storage alloys are one of the materials having the most significant impact on cost in the manufacture of an alkaline storage battery having a hydrogen storage alloy negative electrode. Accordingly, reducing the used amount of high-cost hydrogen storage alloy can achieve cost reduction of alkaline storage batteries of this kind.

However, when a hydrogen storage alloy with high hydrogen equilibrium pressure is used to increase the hydrogen equilibrium pressure of the hydrogen storage alloy as proposed in JP-A-2005-32573, the charge-discharge cycle characteristic (life-time) of a battery using such a hydrogen storage alloy negative electrode deteriorates because the hydrogen storage alloy with high hydrogen equilibrium pressure is inferior in durability. Meanwhile, when the used amount of the hydrogen storage alloy is reduced for reducing cost, output power deteriorates especially in a low temperature region.

Alkaline storage batteries comprising a hydrogen storage alloy having an A₅B₁₉ type crystal structure are disclosed in US 2007/158001 A1, WO 2007/018292 A and JP 2007 250439 A. The stoichiometric ratio (B/A) of the hydrogen storage alloys disclosed in these documents is less than 3.8.

### SUMMARY

An advantage of the invention is to ensure high power, especially high power in a low temperature region, by using a hydrogen storage alloy having an A₅B₁₉ type crystal structure with a high stoichiometric ratio (B/A) representing a molar ratio of B component to A component, and to significantly reduce the used amount of the hydrogen storage alloy to achieve cost reduction. Furthermore, another advantage of the invention is to provide an alkaline storage battery system with an excellent charge-discharge cycle characteristic (life-time or durability) by means of partial charge-discharge control (ΔSOC-pulse Cycle)

According to the invention, an alkaline storage battery system as defined in claim 1 includes an alkaline storage battery. The alkaline storage battery includes an electrode group having a hydrogen storage alloy negative electrode using a hydrogen storage alloy as a negative electrode active material, a nickel positive electrode using nickel hydroxide as a main positive electrode active material, and a separator; an alkaline electrolyte; and an outer can accommodating the electrode group and the alkaline electrolyte. Furthermore, the hydrogen storage alloy has at least an A₅B₁₉ type crystal structure, where a stoichiometric ratio (B/A) representing a molar ratio of B component to A component in the A₅B₁₉ type crystal structure is 3.8 or more, and the alkaline storage battery system is arranged to enable partial charge-discharge control.

Here, increased nickel (Ni)-rich reaction active sites exist on a surface of the hydrogen storage alloy having the A₅B₁₉ type crystal structure and a stoichiometric ratio (B/A) of 3.8 or more representing the molar ratio of B component to A component in the A₅B₁₉ type crystal structure. Accordingly, using the hydrogen storage alloy as the negative electrode active material can ensure high power. Furthermore, even if the used amount of the hydrogen storage alloy having the increased Ni-rich reaction active sites on the surface of the alloy is reduced, the high power can be kept by the presence of the Ni-rich reaction active sites. Accordingly, cost reduction can be achieved by a significant reduction of the used amount of the hydrogen storage alloy.

Furthermore, in the alkaline storage battery having the hydrogen storage alloy negative electrode using the hydrogen storage alloy with the A₅B₁₉ type crystal structure and a stoichiometric ratio (B/A) of 3.8 or more, representing the molar ratio of B component to A component in the A₅B₁₉ type crystal structure, as the negative electrode active material, an experimental result shows that durability deteriorated when the charge-discharge control was performed by repeating a complete charge-discharge cycle. The experimental result also shows that durability did not deteriorate when such alkaline storage battery was controlled so as to perform partial charge-discharge. This is because pulverization of the hydrogen storage alloy progresses when the complete charge-discharge cycle of the alkaline storage battery having the hydrogen storage alloy described above is repeated. This means that the partial charge-discharge control is needed for making an alkaline storage battery system with excellent durability.

The hydrogen storage alloy having the A₅B₁₉ type crystal structure and a stoichiometric ratio (B/A) of 3.8 or more representing the molar ratio of B component to A component in the A₅B₁₉ type crystal structure is represented by the general formula Ln₁₋ₓMgₓNi_{y-a-b}AlₐM_{b} (where Ln is at least one kind of element selected from rare earth elements containing Y, M is at least one kind of element selected from among Co, Mn, and Zn, 0.1 ≤ x ≤ 0.2, 3.5 ≤ y ≤ 3.9, 0.1 ≤ a ≤ 0.3, and 0 ≤ b ≤ 0.2). This is because magnesium segregates when x is larger than 0.2, aluminum segregates when a is larger than 0.3, thereby deteriorating corrosion resistance. This is also because the A₅B₁₉ type crystal structure is hard to be formed when y is smaller than 3.5 or larger than 3.9.

Here, in an alkaline storage battery having a hydrogen storage alloy negative electrode wherein the used amount of the hydrogen storage alloy was reduced so that a capacity ratio Z (= Y/X) is 1.2 or below (1.0 < Z ≤ 1.2) representing a ratio of capacity Y of the hydrogen storage alloy negative electrode to capacity X of the nickel positive electrode, an experimental result shows that the durability did not deteriorate when the partial charge-discharge control was performed. Accordingly, it is preferred that the used amount of the hydrogen storage alloy be reduced so that the capacity ratio Z (= Y/X) is 1.2 or below (1.0 < Z ≤ 1.2) representing the ratio of capacity Y of the hydrogen storage alloy negative electrode to capacity X of the nickel positive electrode in order to enable the significant reduction of the used amount of the hydrogen storage alloy and in order to achieve cost reduction.

In contrast, in the alkaline storage battery having the hydrogen storage alloy negative electrode wherein the used amount of the hydrogen storage alloy was reduced so that the capacity ratio Z (= Y/X) is 1.2 or below (1.0 < Z ≤ 1.2) representing the ratio of capacity Y of the hydrogen storage alloy negative electrode to capacity X of the nickel positive electrode, an experimental result shows that the durability deteriorated when the complete charge-discharge control such as repeating the complete charge-discharge cycle was performed. This is because the reduction of the used amount of the hydrogen storage alloy reduced the absorption amount of oxygen gas in the negative electrode, then a battery internal pressure was increased. Consequently, a phenomenon that the negative electrode active material broke away from a negative electrode sheet was apt to occur, and thus the output power deteriorated as the complete charge-discharge cycle progressed, resulting in lowered durability.

In this case, the partial charge-discharge control is performed so that discharging will be stopped and charging will be started when the voltage reaches a level at which there occurs no variation among a plurality of batteries combined in a battery pack (in this case, a voltage level reaching a state of charge (SOC) of 20%), and so that charging will be stopped and discharging will be started when the voltage reaches a level just before reaching the oxygen overvoltage (in this case, a voltage level reaching an SOC of 80%).

The invention provides the alkaline storage battery system wherein the hydrogen storage alloy having the A₅B₁₉ type crystal structure with the high stoichiometric ratio (B/A) representing the molar ratio of B component to A component is used to ensure high power, especially high power in a low temperature region, and the used amount of the hydrogen storage alloy can be reduced significantly to achieve cost reduction. Furthermore, the invention provides the alkaline storage battery system with excellent durability by partial charge-discharge control.

### BRIEF DESCRIPTION OF THE DRAWING

The invention will be described with reference to the accompanying drawing, wherein like numbers reference like elements.

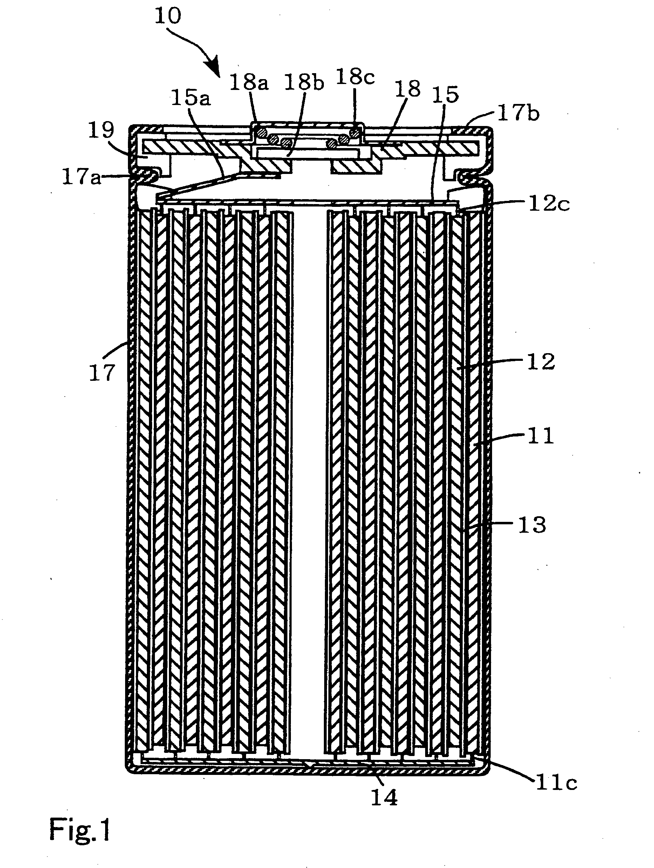

Fig. 1 is a sectional view schematically showing an alkaline storage battery used for an alkaline storage battery system according to an embodiment of the invention.

### DESCRIPTION OF EXEMPLARY EMBODIMENTS

Embodiments of the invention will now be described below, but the invention is not limited to the embodiments and may be variously modified within the scope of the purpose of the invention. Fig. 1 is a sectional view schematically showing an alkaline storage battery used for an alkaline storage battery system according to an embodiment of the invention.

### 1. Hydrogen Storage Alloy Negative Electrode

A hydrogen storage alloy negative electrode 11 of the invention was formed by filling hydrogen storage alloy slurry in a negative electrode sheet of punching metal. In this case, first, metallic elements such as Nd, Mg, Ni, Al, and Co were mixed in a predetermined molar ratio, so that a general formula would become Ln₁₋ₓMgₓNi_{y-a-b}AlₐM_{b} (wherein, Ln is at least one kind of element selected from rare earth elements containing Y, M is at least one kind of element selected from among Co, Mn, and Zn, 0.1 ≤ x ≤ 0.2, 3.5 ≤ y ≤ 3.9, 0.1 ≤ a ≤ 0.3, and 0 ≤ b ≤ 0.2). Next, after the mixture was put in a high-frequency induction heater under argon gas atmosphere to dissolve, the molten metal was cooled rapidly so as to become an alloy ingot, so that a hydrogen storage alloy was obtained.

Next, a melting point (Tm) of the obtained hydrogen storage alloy was measured by using a differential scanning calorimeter (DSC). Then, the hydrogen storage alloy was heat-treated at a temperature 30°C lower than the melting point (Tm) of the hydrogen storage alloy (Ta = Tm·30°C) for a predetermined period of time (10 hours in this case), so that the obtained hydrogen storage alloy would be controlled to have an A₅B₁₉ type crystal structure, and the products were regarded as hydrogen storage alloys α, β, and γ .
Here, analysis of the composition of each of the hydrogen storage alloys α to γ after heat-treatment by an inductively coupled plasma emission spectrometry (ICP) showed that the hydrogen storage alloy α had a composition formula of Nd_{0.9}Mg_{0.1}Ni_{3.2}Al_{0.2}Co_{0.1} (A component of rare earth was 1.0 mol, B component of Ni was 3.5 mol, so that a stoichiometric ratio B/A was 3.5).

Furthermore, it was shown that the hydrogen storage alloy β had a composition formula of La_{0.2}Pr_{0.1}Nd_{0.5}Mg_{0.2}Ni_{3.5}Al_{0.3} (A component of rare earth was 1.0 mol, B component of Ni was 3.8 mol, so that the stoichiometric ratio B/A was 3.8). In addition, it was shown that the hydrogen storage alloy γ had a composition formula of La_{0.5}Pr_{0.1}Nd_{0.3}Mg_{0.1}Ni_{3.7}Al_{0.2} (A component of rare earth was 1.0 mol, B component of Ni was 3.9 mol, so that the stoichiometric ratio B/A was 3.9).

The crystal structure of each of the hydrogen storage alloys α to γ was identified by powder X-ray diffraction analysis using an X-ray diffraction apparatus having a Cu-Kα tube as an X-ray source in the following manner. In this case, the X-ray diffraction was analyzed under the condition of scan speed of 1°/min, tube electrical voltage of 40 kV, tube current of 300 mA, scan step of 1°, and measuring angle (2θ) of 20 to 50°. Then, it was ascertained that the crystal structure of each of the hydrogen storage alloys α to γ was identified to an A₅B₁₉ type crystal structure (Ce₅Co₁₉ type crystal structure) by an obtained XRD profile using JCPDS card charts.

Next, the obtained hydrogen storage alloys α to γ were pulverized mechanically under inert atmosphere, and the alloy powders between 400 and 200 mesh were selected by a screening, respectively. An average particle diameter which indicated 50% of mass integral was 25 µm by measurement of particle size distribution of the powder using a laser scattering particle size distribution analyzer. Then, 0.5 parts by mass of SBR (styrene butadiene rubber) as a water insoluble polymer binder, 0.03 parts by mass of CMC (carboxymethyl cellulose) as a thickener, and a suitable amount of pure water were added to 100 parts by mass of the obtained hydrogen storage alloy powder, and the whole was kneaded to prepare hydrogen storage alloy slurry a, b, or c.

Here, the slurry from the hydrogen storage alloy α was regarded as the hydrogen storage alloy slurry a, the slurry from the hydrogen storage alloy β was regarded as the hydrogen storage alloy slurry b, and the slurry from the hydrogen storage alloy γ was regarded as the hydrogen storage alloy slurry c.
Then, the obtained hydrogen storage alloy slurry a, b, or c was coated on both sides of the negative electrode sheet of punching metal (made of nickel coated steel plate), and the negative electrode sheet was dried at room temperature, rolled so as to be a predetermined packing density, and then cut into a predetermined size (for example, 80 cm × 5 cm) to prepare a hydrogen storage alloy negative electrode 11 (a1, b1, c1, a2, b2, or c2).

Here, the electrode wherein the hydrogen storage alloy slurry a was used and negative electrode capacity was controlled so as to be a capacity ratio of 1.2 to a positive electrode capacity of a nickel positive electrode 12 described later was regarded as the hydrogen storage alloy negative electrode a1. Similarly, the electrode wherein the hydrogen storage alloy slurry b was used and the negative electrode capacity was controlled so as to be the capacity ratio of 1.2 to the positive electrode capacity of the nickel positive electrode 12 was regarded as the hydrogen storage alloy negative electrode b1, and the electrode wherein the hydrogen storage alloy slurry c was used and the negative electrode capacity was controlled so as to be the capacity ratio of 1.2 to the positive electrode capacity of the nickel positive electrode 12 was regarded as the hydrogen storage alloy negative electrode c1.

Furthermore, the electrode wherein the hydrogen storage alloy slurry a was used and the negative electrode capacity was controlled so as to be the capacity ratio of 1.7 to the positive electrode capacity of the nickel positive electrode 12 was regarded as the hydrogen storage alloy negative electrode a2, the electrode wherein the hydrogen storage alloy slurry b was used and the negative electrode capacity was controlled so as to be the capacity ratio of 1.7 to the positive electrode capacity of the nickel positive electrode 12 was regarded as the hydrogen storage alloy negative electrode b2, and the electrode wherein the hydrogen storage alloy slurry c was used and the negative electrode capacity was controlled so as to be the capacity ratio of 1.7 to the positive electrode capacity of the nickel positive electrode 12 was regarded as the hydrogen storage alloy negative electrode c2.

### 2. A Nickel Positive Electrode

Meanwhile, a nickel positive electrode 12 was formed by filling a predetermined amount of nickel hydroxide, cobalt hydroxide, and zinc hydroxide in pores of a nickel sintered plate as a substrate.
In this case, the nickel sintered plate was prepared in the following manner. First, for example, methyl cellulose (MC) as a thickener, polymer hollow microspheres (for example, 60 µm of pore size), and water were mixed with nickel powder, and the whole was kneaded to prepare nickel slurry. Next, the nickel slurry was coated on both sides of punching metal of a nickel coated steel sheet, then the punching metal was heated at 1,000°C under reducing atmosphere to burn out the coated thickener and polymer hollow microspheres, and the nickel powders were sintered with each other to prepare the nickel sintered plate.

Then, after impregnation of the obtained nickel sintered plate with an impregnation liquid described below, alkaline treatment with an alkaline treatment liquid were repeated predetermined times to fill a predetermined amount of nickel hydroxide and zinc hydroxide in pores of the nickel sintered plate. Then, the nickel sintered plate was cut into a predetermined size (for example, 2.5 cm × 2.5 cm) to prepare a nickel positive electrode 12 filled with a positive electrode active material. In this case, a mixed aqueous solution having a molar ratio of nickel nitrate to cobalt nitrate to zinc nitrate of 100 : 5 : 5 and a specific gravity of 1.8 was used for the impregnation liquid, and a sodium hydroxide (NaOH) aqueous solution having a specific gravity of 1.3 was used for the alkaline treatment liquid.

Then, after the nickel sintered plate was immersed in the impregnation liquid to impregnate the impregnation liquid in the pores of the nickel sintered plate, the nickel sintered plate was dried and then immersed in the alkaline treatment liquid for performing the alkaline treatment. Nickel salt and zinc salt and so on were converted into nickel hydroxide and zinc hydroxide and so on by the treatment. Then, the nickel sintered plate was washed sufficiently with water to remove the alkaline solution and dried. A series of filling operation of positive electrode active material, namely impregnation of the impregnation liquid, drying, immersion to the alkaline treatment liquid, water washing, and drying, was repeated 6 times to fill a predetermined amount of the positive electrode active material in the nickel sintered plate.

### 3. Nickel-Hydrogen Storage Battery

Next, a separator 13 made of polyolefin nonwoven fabric having a basis weight of 55 g/cm² was interposed between the hydrogen storage alloy negative electrode 11 (a1, b1, c1, a2, b2, or c2) and the nickel positive electrode 12 prepared above, and the whole unit was rolled spirally to prepare a spiral electrode group. A negative electrode sheet exposure part 11c of the hydrogen storage alloy negative electrode 11 was exposed at a lower part of the spiral electrode group prepared above, and a nickel coated steel sheet exposure part 12c of the nickel positive electrode 12 was exposed at an upper part of the spiral electrode group. Next, a negative electrode collector 14 was welded to the negative electrode sheet exposure part 11c exposed from a lower end face of the obtained spiral electrode group, and a positive electrode collector 15 was welded on the nickel coated steel sheet exposure part 12c of the nickel positive electrode 12 exposed from an upper end face of the spiral electrode group to prepare an electrode.

Next, the obtained electrode was placed in an iron outer can coated with nickel 17 having a cylindrical shape with a base plate (an outer bottom face of the outer can was a negative electrode external terminal), and then the negative electrode collector 14 was welded to an inner bottom face of the outer can 17. Meanwhile, a collector lead part 15a extended from the positive electrode collector 15 was welded to a bottom part of a cover 18 which was used as a positive electrode terminal and had an insulating gasket 19 on a peripheral part of the cover. The cover 18 had a positive electrode cap 18a, and a pressure valve having a valve 18b and a spring 18c was placed in the positive electrode cap 18a (not shown), so that the valve would be deformed at a predetermined pressure.

Next, after an annular groove part 17a was formed on an upper peripheral part of the outer can 17, an electrolyte was poured, and the insulating gasket 19 fitted on the peripheral part of the cover 18 was placed on the annular groove part 17a formed on the upper part of the outer can 17. Then, an open end 17b of the outer can 17 was crimped to prepare a nickel-hydrogen storage battery 10 (A1, B1, C1, A2, B2, or C2) having a battery capacity of 6 Ah and a D size (32 mm diameter and 60 mm high). In this case, an alkaline electrolyte (a mixed aqueous solution of sodium hydroxide (NaOH), potassium hydroxide (KOH), and lithium hydroxide (LiOH)) was poured in the outer can 17 so as to be 2.5 g per battery capacity (Ah) (2.5 g/Ah).

Here, a battery using the hydrogen storage alloy negative electrode a1 (the alloy with the stoichiometric ratio of 3.5 was used and the capacity ratio was 1.2) was regarded as the battery A1, a battery using the hydrogen storage alloy negative electrode b1 (the alloy with the stoichiometric ratio of 3.8 was used and the capacity ratio was 1.2) was regarded as the battery B1, a battery using the hydrogen storage alloy negative electrode c1 (the alloy with the stoichiometric ratio of 3.9 was used and the capacity ratio was 1.2) was regarded as the battery C1. Furthermore, a battery using the hydrogen storage alloy negative electrode a2 (the alloy with the stoichiometric ratio of 3.5 was used and the capacity ratio was 1.7) was regarded as the battery A2, a battery using the hydrogen storage alloy negative electrode b2 (the alloy with the stoichiometric ratio of 3.8 was used and the capacity ratio was 1.7) was regarded as the battery B2, and a battery using the hydrogen storage alloy negative electrode c2 (the alloy with the stoichiometric ratio of 3.9 was used and the capacity ratio was 1.7) was regarded as the battery C2.

### 4. Battery Test

### (1) Low Temperature Power Test

Next, each battery A1, B1, C1, A2, B2, or C2 was charged to 50% of a battery capacity with a charging current of 1 It (30 minutes charging so as to reach an SOC of 50%). Then, after the battery was cooled to -10°C of a surface temperature, charging and discharging were repeated in the order of 1 It charge, 2 It discharge, 2 It charge, 4 It discharge, 3 It charge, 6 It discharge, 4 It charge, 8 It discharge, 5 It charge, and 10 It discharge.

At the time, an idle period for 10 minutes was set between each step, after the idling for 10 minutes after performing each discharge step, 10 seconds discharging and 20 seconds charging were repeated, and a battery voltage at the time of passing 10 seconds was plotted to a discharging current, then a current value when a straight line calculated by the method of least squares was 0.9 V was regarded as a -10°C power. Then, a -10°C power ratio of each battery was calculated from a ratio (relative value) of the -10°C power of each battery A1, B1, C1, B2, or C2 to that of the battery A2 where the -10°C power of the battery A2 was defined as 100, and the results are shown in the following Table 1.

**[Table 1]**

| battery type | details of hydrogen storage alloy negative electrode | | | -10°C power ratio (to battery A2) |
|---|---|---|---|---|
| | classification | stoichiometric ratio of alloy | capacity ratio to positive electrode | |
| A1 | a1 | 3.5 | 1.2 | 75 |
| B1 | b1 | 3.8 | 1.2 | 120 |
| C1 | c1 | 3.9 | 1.2 | 130 |
| A2 | a2 | 3.5 | 1.7 | 100 |
| B2 | b2 | 3.8 | 1.7 | 130 |
| C2 | c2 | 3.9 | 1.7 | 140 |

The followings were revealed from the results of the above mentioned Table 1. Namely, it was demonstrated that the battery A2 using the hydrogen storage alloy negative electrode a2 with the capacity ratio to the nickel positive electrode capacity of 1.7 and the stoichiometric ratio of alloy of 3.5 was a nickel-hydrogen storage battery without sufficient electric power for the current HEV application. The reason is believed to be that the hydrogen storage alloy with the stoichiometric ratio of 3.5 had few Ni-rich reaction active sites.

Furthermore, it was ascertained that the -10°C power ratio of the battery B2 using the hydrogen storage alloy negative electrode b2 with the capacity ratio to the nickel positive electrode capacity of 1.7 and the stoichiometric ratio of alloy of 3.8 was improved significantly than that of the battery A2. The reason is believed to be that the Ni-rich reaction active sites increased in the hydrogen storage alloy with the stoichiometric ratio of 3.8.
Furthermore, it was ascertained that the -10°C power ratio of the battery C2 using the hydrogen storage alloy negative electrode c2 with the capacity ratio to the nickel positive electrode of 1.7 and the stoichiometric ratio of alloy of 3.9 was much more improved than the batteries A2 and B2 due to the increase of the stoichiometric ratio of alloy. The reason is believed to be that the Ni-rich reaction active sites increased remarkably in the hydrogen storage alloy with the stoichiometric ratio of 3.9.

On the other hand, it was ascertained that the -10°C power ratio of the battery A1 using the hydrogen storage alloy negative electrode a1 with the capacity ratio to the nickel positive electrode capacity of 1.2 and the stoichiometric ratio of alloy of 3.5 decreased significantly in comparison with the battery A2. The reason is believed to be that the number of the reaction active points in the whole negative electrode decreased with the decrease of the amount of hydrogen storage alloy because the capacity ratio to the nickel positive electrode capacity made 1.2, so that the power deteriorated remarkably in the low temperature region, especially.

Furthermore, it was ascertained that the -10°C power ratio of the battery B1 using the hydrogen storage alloy negative electrode b1 with the capacity ratio to the nickel positive electrode capacity of 1.2 and the stoichiometric ratio of alloy of 3.8 was improved in comparison with the battery A2. It was affected by a decrease of the number of the reaction active points with the decrease of the amount of hydrogen storage alloy because the capacity ratio to the nickel positive electrode capacity made 1.2, and by an increase of the number of the reaction active points because of the high stoichiometric ratio alloy. On the other hand, in this case, it is believed to be that the effect of the increase of the number of the reaction active points because of the high stoichiometric ratio alloy was greater, so that the low temperature power was improved.

Furthermore, it was ascertained that the -10°C power ratio of the battery C1 using the hydrogen storage alloy negative electrode c1 with the capacity ratio to the nickel positive electrode capacity of 1.2 and the stoichiometric ratio of alloy of 3.9 was improved more than the battery B1. The reason is believed to be that the Ni-rich reaction active sites on the surface of the hydrogen storage alloy increased remarkably with a remarkable increase of the stoichiometric ratio of the hydrogen storage alloy.

### (2) Durability Test

Next, a durability test including a partial charge-discharge cycle test and a complete charge-discharge cycle test of each battery A1, B1, C1, A2, B2, or C2 were performed in the following manner.

### a. Partial Charge-Discharge Cycle Test

A partial charge-discharge cycle test was performed in the following manner. First, a charge-discharge cycle was repeated wherein each of the batteries A1, B1, C1, A2, B2, or C2 was charged at 10 It of charging current until a voltage level reached an SOC of 80% and then each battery was discharged at 10 It of discharging current until the voltage level reached an SOC of 20%. Then, the partial charge-discharge cycle was repeated until the discharge strength reached 10 kAh.

Next, at 25°C, an output power of each battery A1, B1, C1, A2, B2, or C2 after partial charge-discharge cycle test was measured, then the ratio of each of the output power of the batteries A1, B1, C1, B2, or C2 after partial charge-discharge cycle test to that of the battery A2 (relative value) was calculated where the output power of the battery A2 after partial charge-discharge cycle test was defined as 100, and the resulting ratios as the durability after partial charge-discharge cycle test are shown in the following Table 2.

### b. Complete Charge-Discharge Cycle Test

Meanwhile, a complete charge-discharge cycle test was performed in the following manner. A charge-discharge cycle wherein each battery A1, B1, C1, A2, B2, or C2 was charged at room temperature (approximately 25°C) at 1 It of charging current until full charge, the charging was stopped for 1 hour when the battery voltage of 10 mV fell down (-ΔV = 10 mV), and then the battery was discharged at 1 It discharging current until the cutoff voltage reached 0.9 V was repeated. Then, the complete charge-discharge cycle was repeated until the discharge strength reached 10 kAh.

Next, at 25°C, an output power of each battery A1, B1, C1, A2, B2, or C2 after complete charge-discharge cycle test was measured. Then the ratio of the output power of each of the batteries A1, B1, C1, B2, or C2 after complete charge-discharge cycle test to that of the battery A2 after partial charge-discharge cycle test (relative value) was calculated where the output power of the battery A2 after partial charge-discharge cycle test was defined as 100, and the resulting ratios as the durability after complete charge-discharge cycle test are shown in the following Table 2.

**[Table2]**

| type of battery system | battery type | details of hydrogen storage alloy negative electrode | | | -10°C power ratio (to battery A2) | charge -discharge condition | durability (to battery system A21) |
|---|---|---|---|---|---|---|---|
| | | classify -cation | stoichio -metric ratio of alloy | capacity ratio to positive electrode | | | |
| A11 | A1 | a1 | 3.5 | 1.2 | 75 | p^{*1} | 100 |
| B11 | B1 | b1 | 3.8 | 1.2 | 120 | p^{*1} | 100 |
| C11 | C1 | c1 | 3.9 | 1.2 | 130 | p^{*1} | 100 |
| A21 | A2 | a2 | 3.5 | 1.7 | 100 | p^{*1} | 100 |
| B21 | B2 | b2 | 3.8 | 1.7 | 130 | p^{*1} | 100 |
| C21 | C2 | c2 | 3.9 | 1.7 | 140 | p^{*1} | 100 |
| A12 | A1 | a1 | 3.5 | 1.2 | 75 | c^{*2} | 80 |
| B12 | B1 | b1 | 3.8 | 1.2 | 120 | c^{*2} | 65 |
| C12 | C1 | c1 | 3.9 | 1.2 | 130 | c^{*2} | 55 |
| A22 | A2 | a2 | 3.5 | 1.7 | 100 | c^{*2} | 95 |
| B22 | B2 | b2 | 3.8 | 1.7 | 130 | c^{*2} | 80 |
| C22 | C2 | c2 | 3.9 | 1.7 | 140 | c^{*2} | 75 |

| | | | | | | | |
|---|---|---|---|---|---|---|---|
| ^{*1)} p: partial charge-discharge ^{*2)} c: complete charge-discharge | | | | | | | |

The followings were revealed from the results of the above mentioned Table 2. Namely, in the case of the output power of the battery A2 using the hydrogen storage alloy negative electrode a2 with the capacity ratio to the nickel positive electrode capacity of 1.7 and the stoichiometric ratio of alloy of 3.5 after partial charge-discharge cycle test was defined as 100, when the complete charge-discharge cycle was performed, it was demonstrated that even if the capacity ratio to the nickel positive electrode capacity was 1.7 (battery systems A22, B22, and C22) or 1.2 (battery systems A12, B12, and C12), or even if the stoichiometric ratio was 3.5 (batteries A2 and A1), 3.8 (batteries B2 and B1), or 3.9 (batteries C2 and C1), namely the durability of all the battery systems A12, B12, C12, A22, B22, and C22 deteriorated. The reason is believed to be that pulverization of the hydrogen storage alloy progressed by repeating the complete charge-discharge cycle.

In the battery A1 wherein the capacity ratio to the nickel positive electrode capacity was 1.2 and the stoichiometric ratio was 3.5, the battery B1 wherein the capacity ratio to the nickel positive electrode capacity was 1.2 and the stoichiometric ratio was 3.8, and the battery C1 wherein the capacity ratio to the nickel positive electrode capacity was 1.2 and the stoichiometric ratio was 3.9, it is believed to be that the durability deteriorated further by the output power deterioration after development of the cycle because reduction of the oxygen gas absorption amount in the whole negative electrode caused mass reduction by internal pressure increase, and further because the negative electrode active material was apt to break away from the negative electrode sheet.

Meanwhile, when the partial charge-discharge cycle was performed, if the capacity ratio to the nickel positive electrode capacity was 1.7 (battery systems A21, B21, and C21), it was demonstrated that the durabilities were equivalent even if the stoichiometric ratio was 3.5 (battery A2), 3.8 (battery B2), or 3.9 (battery C2).
In contrast, when the partial charge-discharge cycle was performed, if the capacity ratio to the nickel positive electrode capacity was 1.2 (battery system A11), it was demonstrated that the durability was equivalent to the batteries A2, B2, and C2 but the -10°C power ratio deteriorated in the case of the stoichiometric ratio of 3.5 (battery A1). It means that the mass reduction of the hydrogen storage alloy causes deterioration of the low temperature output power characteristic when the hydrogen storage alloy with the stoichiometric ratio of 3.5 is used.

However, when the partial charge-discharge cycle was performed, when the capacity ratio to the nickel positive electrode capacity was 1.2 (battery systems B11 and C11), namely when the mass of hydrogen storage alloy decreased, even if the stoichiometric ratio was 3.8 (battery B1) or 3.9 (battery C1), it was demonstrated that the durability was equivalent to the batteries A2, B2, and C2 and the -10°C power ratio did not deteriorate so much. It means that the reduction of battery cost and mass is possible by using the hydrogen storage alloy with a stoichiometric ratio of 3.8 or more even if the capacity ratio to the nickel positive electrode capacity is 1.2 when the partial charge-discharge cycle is performed.

Accordingly, for enabling the reduction of battery cost and mass, a nickel-hydrogen storage battery is structured by using the hydrogen storage alloy negative electrode wherein the hydrogen storage alloy with a stoichiometric ratio of 3.8 or more is used for the negative electrode active material, and the hydrogen storage alloy negative electrode is controlled so as to be the capacity ratio to the nickel positive electrode capacity of 1.2 or below.
Then, for the application relating to vehicle such as a hybrid electric vehicle and a pure electric vehicle, it is necessary to use a battery pack having a plurality of the nickel-hydrogen storage batteries and to take a charge-discharge control means that enables to control the partial charge-discharge in order that the battery pack can repeat the partial charge-discharge cycle.
In this case, it is preferred that the partial charging-discharging is controlled so that discharging will be stopped and charging will be started when the voltage level reaches an SOC of 20%, and so that charging will be stopped and discharging will be started when the voltage level reaches an SOC of 80%.

Here, the hydrogen storage alloy is represented as a general formula of Ln₁₋ₓMgₓNi_{y-a-b}AlaM_{b}, wherein a condition of 0.1 ≤ x ≤ 0.2, 3.5 ≤ y ≤ 3.9, 0.1 ≤ a ≤ 0.3, and 0 ≤ b ≤ 0.2 has to be satisfied. This is because magnesium segregates when x > 0.2, and aluminum segregates when a > 0.3, so that each causes a deterioration of corrosion resistance. Furthermore, it is a reason that the A₅B₁₉ type crystal structure is hard to be formed when y < 3.5 or y > 3.9.

As described above, the invention can provide the alkaline storage battery system wherein high power, especially high power in a low temperature region, is ensured by using the hydrogen storage alloy with the high stoichiometric ratio, and to provide the low-cost alkaline storage battery system with keeping high power and high durability needed for vehicle application by remarkable reduction of the hydrogen storage alloy amount. In other words, the invention can provide the inexpensive alkaline storage battery system wherein high power and high durability are kept and a remarkable amount of hydrogen storage alloy is reduced.

## Claims

1. An alkaline storage battery system comprising:
an alkaline storage battery including:
an electrode group having a hydrogen storage alloy negative electrode using a hydrogen storage alloy as a negative electrode active material, a nickel positive electrode using nickel hydroxide as a main positive electrode active material, and a separator;
an alkaline electrolyte; and
an outer can accommodating the electrode group and the alkaline electrolyte;
the hydrogen storage alloy having at least an A₅B₁₉ type crystal structure,
**characterized in that** a stoichiometric ratio (B/A) representing a molar ratio of B component to A component in the A₅B₁₉ type crystal structure is 3.8 or more, and
that the alkaline storage battery system further comprises a charge-discharge control means being adapted to perform in a manner that discharging is stopped and charging is started when a voltage level reaches a state of charge (SOC) of 20%, and that charging is stopped and discharging is started when a voltage level reaches an SOC of 80%.

2. The alkaline storage battery system according to claim 1, wherein the hydrogen storage alloy is represented by the general formula Ln₁₋ₓMgₓNi_{y-a-b}AlₐM_{b} (where Ln is at least one kind of element selected from rare earth elements containing Y, M is at least one kind of element selected from among Co, Mn, and Zn, 0.1 ≤ x ≤ 0.2, 3.5 ≤ y ≤ 3.9, 0.1 ≤ a ≤ 0.3, and 0 ≤ b ≤ 0.2).

3. The alkaline storage battery system according to claim 1, wherein a capacity ratio Z (= Y/X) is 1.2 or below (1.0 < Z ≤ 1.2) representing a ratio of capacity Y of the hydrogen storage alloy negative electrode to capacity X of the nickel positive electrode.

## Patentansprüche

1. Alkalisches Speicherbatteriesystem, das folgendes umfasst:
eine alkalische Speicherbatterie, die folgendes einschließt:
eine Elektrodengruppe, die eine negative Wasserstoffspeicherlegierungselektrode, die eine Wasserstoffspeicherlegierung als ein negatives aktives Elektrodenmaterial verwendet, eine positive Nickelelektrode, die Nickelhydroxid als positives aktives Hauptelektrodenmaterial verwendet, und einen Separator aufweist;
einen alkalischen Elektrolyten; und
eine äußere Hülse, welche die Elektrodengruppe und den alkalischen Elektrolyten aufnimmt;
wobei die Wasserstoffspeicherlegierung mindestens eine A₅B₁₉-Typ Kristallstruktur aufweist,
**dadurch gekennzeichnet, dass** ein stöchiometrisches Verhältnis (B/A), das ein Molverhältnis der Komponente B zur Komponente A in der A₅B₁₉-Typ Kristallstruktur wiedergibt, 3,8 oder mehr beträgt, und
dass das alkalische Speicherbatteriesystem weiter ein Ladungs-Entladungs-Steuerungsmittel umfasst, das eingerichtet ist auf eine Art zu arbeiten, dass Entladung beendet wird und Ladung begonnen wird, wenn ein Spannungspegel einen Ladungszustand (SOC) von 20% erreicht, und dass Ladung beendet wird und Entladung begonnen wird, wenn ein Spannungspegel einen SOC von 80% erreicht.

2. Alkalisches Speicherbatteriesystem gemäß Anspruch 1, wobei die Wasserstoffspeicherlegierung durch die allgemeine Formel Ln₁₋ₓMgₓNi_{y-a-b}AlₐM_{b} dargestellt ist (wobei Ln mindestens eine Art von Element ausgewählt aus Seltenerdelementen, die Y enthalten, ist, M mindestens eine Art von Element ausgewählt aus Co, Mn und Zn ist, 0,1 ≤ x ≤ 0,2, 3,5 ≤ y ≤ 3,9, 0,1 ≤ a ≤ 0,3 und 0 ≤ b ≤ 0,2).

3. Alkalisches Speicherbatteriesystem gemäß Anspruch 1, wobei ein Kapazitätsverhältnis Z (=Y/X) 1,2 oder darunter beträgt (1,0 < Z ≤ 1,2), das ein Verhältnis von Kapazität Y der negativen Wasserstoffspeicherlegierungselektrode zu Kapazität X der positiven Nickelelektrode darstellt.

## Revendications

1. Système de batterie de stockage alcaline comprenant :
une batterie de stockage alcaline comprenant :
un groupe d'électrodes comportant une électrode négative en alliage de stockage d'hydrogène utilisant un alliage de stockage d'hydrogène en tant que matériau actif d'électrode négative, une électrode positive en nickel utilisant de l'hydroxyde de nickel en tant que matériau actif d'électrode positive principale et un séparateur ;
un électrolyte alcalin ; et
une boîte extérieure logeant le groupe d'électrodes et l'électrolyte alcalin ;
l'alliage de stockage d'hydrogène ayant au moins une structure cristalline du type A₅B₁₉,
**caractérisé en ce qu'**un rapport stoechiométrique (B/A) représentant un rapport molaire entre le composant B et le composant A dans la structure cristalline du type A₅B₁₉ est de 3,8 ou plus, et
**en ce que** le système de batterie de stockage alcaline comprend en outre des moyens de commande de charge-décharge conçus pour fonctionner d'une manière telle qu'une décharge soit arrêtée et qu'une charge soit débutée lorsqu'un niveau de tension atteint un état de charge (SOC) de 20 % et qu'une charge soit arrêtée et qu'une décharge soit débutée lorsqu'un niveau de tension atteint un SOC de 80 %.

2. Système de batterie de stockage alcaline selon la revendication 1, dans lequel l'alliage de stockage d'hydrogène est représenté par la formule générale Ln₁₋ₓMgₓNi_{y-a-b}AlₐM_{b} (où Ln est au moins un type d'élément sélectionné parmi les éléments des terres rares contenant du Y, M est au moins un type d'élément sélectionné parmi le Co, Mn et Zn, 0,1 ≤ x ≤ 0,2, 3,5 ≤ y ≤ 3,9, 0,1 ≤ a ≤ 0,3 et 0 ≤ b ≤ 0,2).

3. Système de batterie de stockage alcaline selon la revendication 1, dans lequel un rapport de capacité Z (= Y/X) est de 1,2 ou moins (1,0 < Z ≤ 1,2) représentant un rapport entre la capacité Y de l'électrode négative en alliage de stockage d'hydrogène et la capacité X de l'électrode positive en nickel.
